# FASCICULE DE BREVET EUROPEEN

(11) **EP 3 902 645 B1**
(45) Date de publication et mention de la délivrance du brevet: **09.10.2024**
(21) Numéro de dépôt: 18827171.2
(22) Date de dépôt: 16.11.2018
(51) Int. Cl.: B22F 10/28, B33Y 10/00, B33Y 30/00, B22F 10/73, B22F 12/30, B22F 12/50, B22F 12/67, B29C 64/245, B29C 64/357

(54) **PLATEFORME ADAPTATIVE AMOVIBLE DE FABRICATION ADDITIVE POUR UN ÉQUIPEMENT DE FABRICATION ADDITIVE MÉTALLIQUE PAR FUSION LASER**
ANPASSUNGSFÄHIGE WECHSELBARE PLATTFORM FÜR GENERATIVEN HERSTELLUNGSAPPARAT
ADAPTABLE REMOVABLE PLATFORM FOR AN ADDITIVE MANUFACTURING APPARATUS

(43) Date de publication de la demande: 03.11.2021
(73) Titulaire: GMP Ingenierie, 74800 Saint-Pierre-en-Faucigny (FR)
(72) Inventeur: ZRIBI, Aymen, 74800 Saint-Pierre-en-Faucigny (FR)
(74) Mandataire: Innovincia
(86) Numéro de dépôt international: PCT/FR2018/052886
(87) Numéro de publication internationale: WO 2020/099732

(56) Documents cités:
- EP-A1- 2 463 081
- EP-A1- 3 098 002
- EP-A1- 3 275 655
- WO-A1-2018/101908
- CN-A- 107 262 717
- DE-A1- 102009 020 987
- FR-A1- 2 856 614
- JP-A- 2017 087 529
- US-A1- 2007 026 099
- US-A1- 2011 293 771
- US-A1- 2015 202 686
- US-A1- 2017 239 725
- US-A1- 2017 246 806
- US-B1- 10 065 242

## Description

La présente invention concerne le domaine de la fabrication additive métallique par fusion laser qui consiste a obtenir des structures métalliques par fusion laser de particules métalliques issues de poudres métalliques. Cette méthode de fabrication permet d'obtenir des formes et caractéristiques qui ne peuvent être obtenues avec les autres méthodes connues de l'état de la technique.

A l'heure actuelle, il existe différents types de machines de fabrication additive métallique comme décrit par exemple dans les documents US2011/293771A1, EP2463081A1, EP3275655A1, DE102009020987A1, US2015/202686A1, US2007/026099A1, WO2018/101908A1, US2017/246806A1, US2017/239725A1, JP2017087529A, US10065242B1, CN107262717A, FR2856614A1 ou EP3098002A1, des machines de grandes dimensions comprenant un laser ayant une puissance importante, par exemple supérieure ou égale 400W pour permettre une fabrication rapide de pièces de grande dimension, par exemple supérieure à 10cm, et des machines de faible dimension destinées au développement comprenant un laser de faible puissance, par exemple 200W et utilisées pour déterminer les différents paramètres de fabrication associés à un type de poudre métallique. Ces machines de développement ont un coût réduit par rapport aux machines de production et permettent de réduire la quantité de poudre nécessaire à la réalisation des essais.

Un exemple de machine de grande dimension est décrit dans la demande EP2723552 et correspond à la machine EOS M290 commercialisée par la société EOS GMBH.

Cependant, du fait de l'utilisation de laser de puissance différente dans les machines de développement et de production, des essais supplémentaires doivent être réalisés sur les machines de production pour déterminer les paramètres de fusion avec un laser de forte puissance.

Cette méthode présente donc un coût élevé du fait des machines et des essais nécessaires à la détermination des paramètres de fusion pour chaque nouvelle poudre métallique utilisée. De plus, en cas de fabrication de pièces de petites tailles, par exemple inférieures à 10 cm avec une machine de grande dimension, une grande quantité de poudre est nécessaire au fonctionnement de la machine mais est gaspillée car non utilisée pour la fabrication, ce qui rend le procédé coûteux.

La présente invention vise donc à réduire le coût de la détermination des paramètres de fusion.

A cet effet, la présente invention concerne une plateforme adaptative amovible de fabrication additive pour un équipement de fabrication additive métallique par fusion laser, selon la revendication 1.

Selon un autre aspect de la présente invention, la plateforme adaptative amovible de fabrication additive comprend également des rails de délimitation disposés de part et d'autre du plateau support et configurés pour délimiter transversalement une zone d'étalement de la poudre métallique.

Selon un aspect additionnel de la présente invention, le troisième secteur comprend un troisième réservoir destiné à recevoir au moins une partie de la poudre métallique raclée par l'élément racleur dans le troisième secteur.

Selon un aspect supplémentaire de la présente invention, le troisième réservoir est un réservoir amovible pour permettre de vider la poudre métallique récupérée.

Selon l'invention, la plateforme adaptative amovible de fabrication additive comprend également une première plaque de liaison solidaire du premier piston et configurée pour être fixée au premier plateau par une fixation magnétique et une deuxième plaque de liaison solidaire du deuxième socle et configurée pour être fixée au premier socle par une fixation magnétique.

Selon l'invention, la plateforme adaptative amovible de fabrication additive comprend également un dispositif d'arrêt de l'élément racleur pour éviter un contact entre l'élément racleur et le premier piston lorsque ledit premier piston dépasse le niveau du plateau support.

Selon l'invention, le dispositif d'arrêt comprend :
- une première partie solidaire du plateau support comprenant :
   - une base,
   - un coulisseau configuré pour se déplacer axialement dans la base entre une positon basse située sous le plateau support et une position haute dans laquelle le coulisseau fait saillie au-dessus du plateau support,
- une deuxième partie solidaire de la première plaque de liaison est configurée pour venir appuyer sur le coulisseau lorsque la première plaque de liaison est dans une position haute.

Selon un aspect supplémentaire de la présente invention, le premier réservoir a une forme parallélépipédique rectangle et le deuxième réservoir a une forme cylindrique, le premier socle a une section horizontale de forme rectangulaire et le deuxième socle a une section horizontale de forme circulaire.

Selon un autre aspect de la présente invention, le deuxième réservoir comprend au moins un joint d'étanchéité disposé entre le premier piston et une paroi du deuxième réservoir.

Selon un aspect additionnel de la présente invention, le deuxième réservoir comprend un premier et un deuxième joints d'étanchéité disposés dans des gorges périphériques ménagées dans le premier piston, le premier joint d'étanchéité étant un joint en feutre et le deuxième joint d'étanchéité étant un joint de type quadrilobe en élastomère.

Selon un autre aspect de la présente invention, le deuxième socle comprend un support et une surface supérieure de fabrication amovible.

Selon un aspect additionnel de la présente invention, la surface supérieure de fabrication amovible est fixée sur le support par vissage.

Selon un autre aspect de la présente invention, la plateforme adaptative amovible de fabrication additive comprend également des moyens de transport amovibles configurés pour être fixés sur le plateau support pour faciliter la manipulation de la plateforme lors de sa mise en place ou de son enlèvement de l'enceinte de production.

Selon un aspect supplémentaire de la présente invention, la plateforme adaptative amovible de fabrication additive comprenant également :
- une première plaque support rigidement liée au plateau support, formant le fond du deuxième réservoir et comprenant un évent et,
- une deuxième plaque support rigidement liée au plateau support, disposée contre l'extrémité basse de la paroi périphérique et comprenant un évent.

Selon un aspect additionnel de la présente invention, la plateforme adaptative amovible de fabrication additive comprend également un sous-système de réduction comprenant une première entretoise et une deuxième entretoise destinées à venir se positionner respectivement dans le deuxième réservoir et à l'intérieur de la paroi périphérique de manière à permettre d'adapter la taille du réservoir de poudre métallique et de la zone de fusion.

Selon un autre aspect de la présente invention, les première et deuxième entretoises sont de forme tubulaire définissant un cylindre intérieur et la largeur des rails de délimitation est adaptée pour que l'écart entre lesdits rails de délimitation corresponde au diamètre du cylindre intérieur des première et deuxième entretoises.

La présente invention concerne également un procédé de fabrication additive métallique par fusion laser dans un équipement adapté selon la revendication 14.

D'autres caractéristiques et avantages de l'invention apparaîtront plus clairement à la lecture de la description suivante, donnée à titre d'exemple illustratif et non limitatif et des dessins annexés parmi lesquels :
[Fig.1] représente une vue en perspective d'une enceinte d'un équipement de fabrication additive métallique par fusion laser.
[Fig.2] représente une vue en coupe d'une enceinte d'un équipement de fabrication additive métallique par fusion laser.
[Fig.3] représente une vue schématique en perspective d'une plateforme adaptative amovible de fabrication additive selon un premier mode de réalisation de la présente invention.
[Fig.4] représente une vue schématique en coupe d'une plateforme adaptative amovible de fabrication additive selon un premier mode de réalisation de la présente invention.
[Fig.5] représente une vue schématique de dessus d'une plateforme adaptative amovible de fabrication additive selon un deuxième mode de réalisation de la présente invention.
[Fig.6] représente une vue schématique en coupe d'une plateforme adaptative amovible de fabrication additive selon un deuxième mode de réalisation de la présente invention.
[Fig.7] représente une vue schématique en perspective d'une plateforme adaptative amovible de fabrication additive selon un premier mode de réalisation de la présente invention.
[Fig.8] représente un organigramme des étapes d'un procédé de fabrication additive selon un mode de réalisation de la présente invention.
[Fig.9] à [Fig13] représentent des vues schématiques en perspective de l'enceinte de la figure 1 avec une plateforme adaptative amovible de fabrication additive selon un premier mode de réalisation de la présente invention dans différentes configurations.

Dans la description suivante, les termes « premier », « second », « deuxième »...par exemple « première zone », « deuxième zone » sont utilisés pour un simple indexage des éléments pour dénommer et différencier des éléments ou actions proches mais non identiques. Cette indexation n'implique pas de priorité d'un élément par rapport à un autre et on peut aisément inter changer de telles dénominations sans sortir du cadre de la présente description. Cette indexation n'implique pas non plus un ordre dans le temps.

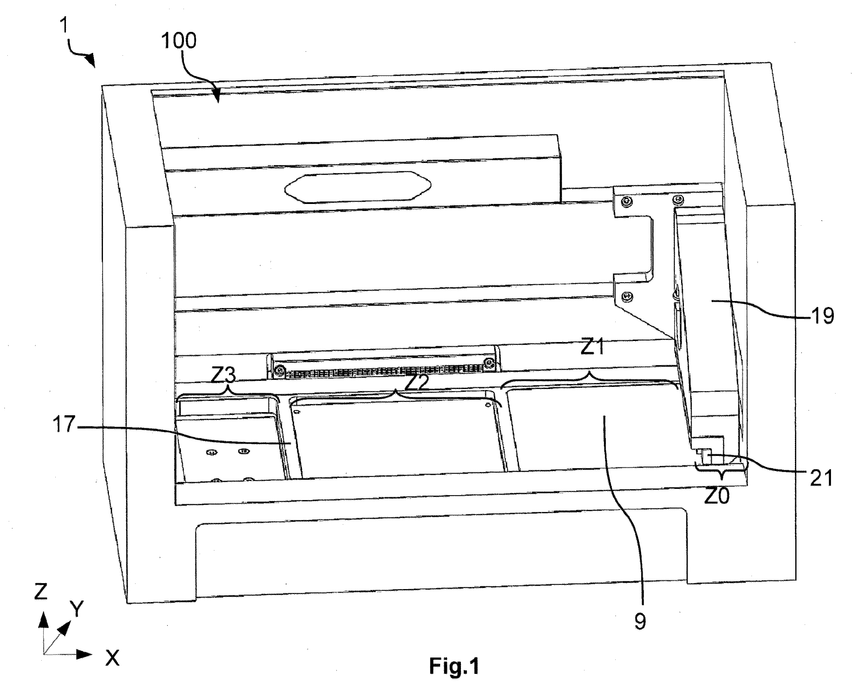

Les éléments relatifs à une position spatiale sont donnés par rapport à l'orientation de l'équipement de fabrication additive 1 lors d'une utilisation normale. Sur le trièdre de la figure1, l'axe Z représente la direction verticale lors d'une utilisation normale de l'équipement de fabrication additive 1.

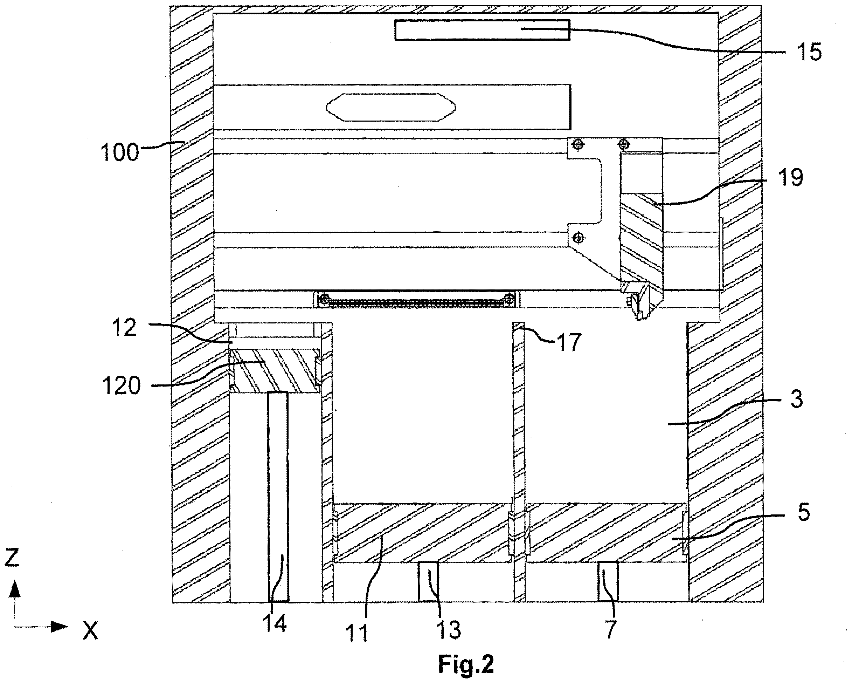

Les figures 1 et 2 représentent des vues schématiques en perspective et en coupe d'une enceinte 100 d'un équipement de fabrication additive métallique par fusion laser 1. L'équipement 1 est un équipement de grande capacité permettant de fabriquer des pièces de grande taille, par exemple de taille supérieure à 10 cm.

L'enceinte 100 est par exemple de forme générale parallélépipédique et comprend:
- une première zone Z1 comprenant un premier réservoir 3 dont le fond est réalisé par un premier plateau 5 mobile en translation verticale. Le premier plateau 5 est entraîné en translation par un premier vérin 7, par exemple un vérin hydraulique ou électrique. En début de fabrication, le premier plateau 5 est configuré pour être dans une position basse pour former le premier réservoir 3 destiné à recevoir la réserve de poudre métallique 9 utile pour la fabrication. Le premier vérin 7 est configuré pour déplacer le premier plateau 5 verticalement vers le haut par itération d'une hauteur prédéterminée lors de la fabrication pour fournir une quantité de poudre métallique prédéterminée. La quantité prédéterminée correspond à une quantité permettant d'obtenir une couche de particules de poudre métallique 9 sur l'ensemble de la deuxième zone Z2 après l'étalement de la poudre métallique 9. La première zone Z1 est dite zone d'alimentation.
- une deuxième zone Z2 adjacente à la première zone Z1 et comprenant un premier socle 11 mobile en translation verticale. Le premier socle 11 est entraîné en translation par un deuxième vérin 13, par exemple un vérin hydraulique ou électrique. Le premier socle 11 est destiné à recevoir une couche de poudre métallique à chaque étape de fabrication et à supporter la pièce métallique obtenue par fusion. Durant la fabrication, le deuxième vérin 13 est configuré pour déplacer le premier socle 11 verticalement vers le bas par itération d'une hauteur prédéterminée correspondant sensiblement à la hauteur d'une couche de poudre métallique 9. La deuxième zone Z2 est dite zone de fabrication.
- une troisième zone Z3 adjacente à la deuxième zone Z2 et comprenant un bac de récupération 12 configuré pour récupérer au moins une partie de la poudre métallique 9 non utilisée lors du procédé de fabrication. Le bac de récupération 12 comprend également un fond mobile 120 entraîné en translation par un troisième vérin 14.
- un dispositif d'émission laser 15 configuré pour transmettre un faisceau laser sélectivement vers des emplacements de la deuxième zone Z2 correspondant aux emplacements comprenant les particules de poudre métallique 9 à fusionner. Le dispositif d'émission laser 15 peut être de forte puissance, par exemple d'une puissance supérieure ou égale à 400W.
- un cadre support 17 formant un rebord périphérique à la première Z1, la deuxième Z2 et la troisième zone Z3. Les trois zones Z1, Z2 et Z3 sont alignées. Le cadre support 17 définit également la surface de travail, c'est-à-dire la hauteur à laquelle la poudre métallique 9 est répartie dans la deuxième zone Z2 à partir de la première zone Z1 ainsi que la hauteur à laquelle se fait la fusion des particules de poudre métallique 9. Le cadre support 17 peut également s'étendre dans une zone latérale Z0 adjacente à la première zone Z1 et alignée avec les autres zones Z1, Z2 et Z3.
- un bras mobile 19 en translation horizontale disposé au-dessus du cadre support 17 et configuré pour déplacer un premier élément racleur 21. Le bras mobile 19 est configuré pour se déplacer entre deux positions extrêmes de manière à déplacer le premier élément racleur 21 entre une première position située dans la zone latérale Z0 et une deuxième position située dans la troisième zone Z3. Sur la figure 1, le bras mobile 19 est dans la première position. Le passage du bras mobile 19 de la première position à la deuxième position permet de répartir les particules de poudre métallique 9 issus du premier réservoir 3 de la première zone Z1 vers la deuxième zone Z2 où elles sont étalées et l'éventuel surplus de poudre métallique 9 vers la troisième zone Z3 via le premier élément racleur 21.

Ainsi, lors du procédé de fabrication additive, le premier plateau 5 est positionné en position basse pour permettre le remplissage de la poudre métallique 9 dans le premier réservoir 3. La hauteur du premier plateau 5 et donc le volume du premier réservoir 3 peuvent être ajustés en fonction du volume de poudre métallique 9 nécessaire à la fabrication additive. La poudre métallique 9 peut être étalée dans le premier réservoir 3 de manière à former une surface sensiblement horizontale. Le premier socle 11 est positionné en position haute, c'est-à-dire sensiblement au niveau du cadre support 17. Le bras mobile 19 est positionné dans la première position.

Le procédé de fabrication additive comprend ensuite une suite d'étapes itératives, chaque étape comprenant :
- une première sous-étape dans laquelle le premier vérin 7 déplace le premier plateau 5 vers le haut d'un incrément prédéterminé, par exemple d'un incrément compris entre 60 et 100 µm.
- une deuxième sous-étape dans laquelle le bras mobile 19 se déplace de la première position vers la deuxième position pour répartir la couche de poudre métallique de manière sensiblement uniforme dans la deuxième zone Z2 via l'élément racleur 21.
- une troisième sous-étape dans laquelle un faisceau laser est transmis par le dispositif d'émission laser 15 vers les emplacements comprenant les particules de poudre à fusionner. Le temps de radiation laser ainsi que la puissance des radiations sont ajustés en fonction du type de poudre métallique 9, notamment du métal utilisé ou de la taille des particules. Ces paramètres sont par exemple déterminés lors d'une phase d'essais.
- une quatrième sous-étape dans laquelle le deuxième vérin 13 déplace le premier socle 11 vers le bas d'un incrément prédéterminé correspondant sensiblement à une couche de particules de poudre métallique 9.
- une cinquième sous-étape dans laquelle le bras mobile 19 retourne dans la première position.

Les différentes sous-étapes sont ensuite répétées à chaque étape jusqu'à l'obtention de la pièce voulue grâce à la fusion des différentes couches de particules de poudre métallique 9.

Un tel procédé est par exemple décrit dans le document EP2723552.

Afin de réduire la quantité de poudre métallique 9 nécessaire à la fabrication de pièces de faible dimension, notamment inférieures à 10cm, notamment durant la phase d'essais et de mise au point durant laquelle les différents paramètres de fabrication sont déterminés, l'invention concerne une plateforme adaptative amovible 25 destinée à être placée dans l'enceinte 100 d'un équipement de fabrication additive métallique par fusion laser 1 tel que décrit précédemment par exemple une machine décrit dans EP 2723552 ou la machine EOS M290 commercialisée par EOS GMBH, notamment lors des phases d'essais et de mise au point ou pour la fabrication de pièce de faible dimension. Il est à noter que la plateforme adaptative amovible 25 peut être installée dans l'enceinte de la machine EOS M290 sans nécessiter de modification ou de configuration spéciale au niveau de ladite enceinte.

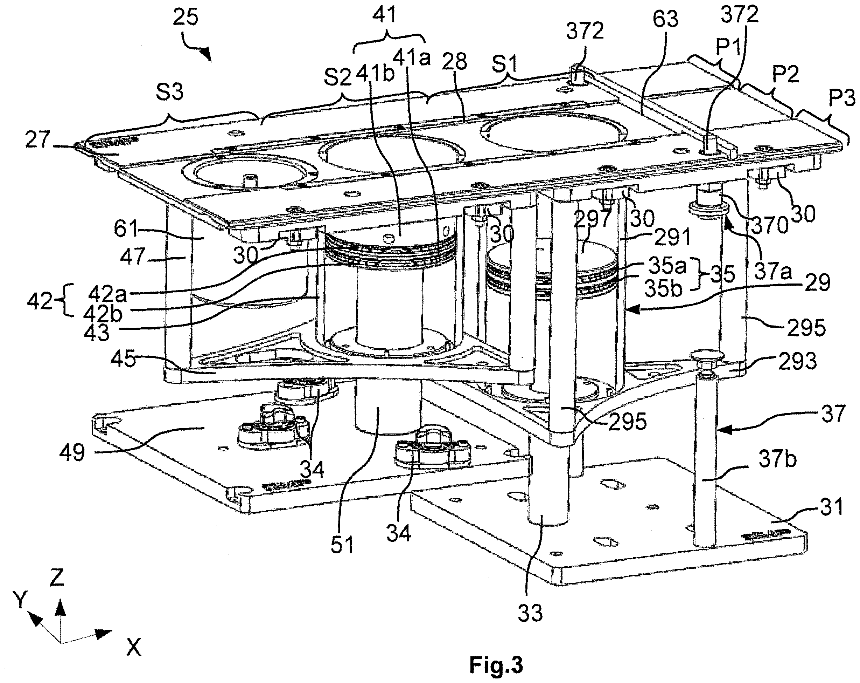

La figure 3 représente une vue en perspective d'une plateforme adaptative amovible 25 selon la présente invention. La plateforme 25 comprend un plateau support 27 configuré pour venir se placer sur le cadre support 17 de l'enceinte de production 100.

Le plateau support 27 est par exemple fixé au cadre support 17 par des cames de serrage 30 disposées sous le plateau support et configuré pour pivoter d'un quart de tour de sorte que leur extrémité est configurée pour venir se placer sous le cadre support 17 et permettre la retenue du plateau support 27 sur le cadre support 17. Dans l'exemple de la figure 3, quatre cames de serrage 30 sont utilisées.

Le plateau support 27 est par exemple de forme générale rectangulaire et est configuré pour être positionné dans l'enceinte 100 de manière à recouvrir au moins partiellement les première Z1 et deuxième Z2 zones. Le plateau support 27 peut être divisé dans sa largeur en trois parties, une partie centrale de travail P2 et deux parties latérales P1 et P3 délimitant la partie centrale P2. Les parties latérales P1 et P3 peuvent être surélevées par rapport à la partie centrale P2. La surélévation est par exemple de 2.5 mm. La partie centrale P2 comprend un premier secteur S1 dit secteur d'alimentation réduite de poudre métallique, un deuxième secteur S2 dit de fabrication réduite adjacent au premier secteur S1 et un troisième secteur S3 dit de récupération adjacent au deuxième secteur S2. Les trois secteurs S1, S2 et S3 sont délimités transversalement par des rails de délimitation 28 disposés parallèlement l'un par rapport à l'autre. Les rails de délimitation 28 sont par exemple disposés à l'interface entre la partie centrale P2 et les parties latérales P1 et P3. L'écart entre les rails de délimitation 28 est par exemple compris entre ***5** et 15 cm.*

Le premier secteur S1 est configuré pour s'étendre en regard d'une portion de la première zone Z1 lorsque la plateforme adaptative amovible 25 est positionnée dans l'enceinte 100. Le premier secteur S1 comprend un deuxième réservoir 29 dont la section horizontale est inférieure à celle du premier réservoir 3. Le deuxième réservoir 29 comprend par exemple une première paroi cylindrique 291 dont une première extrémité est configurée pour venir se positionner dans une ouverture du plateau support 27. La première paroi cylindrique 291 s'étend sous le plateau support 27. La première paroi cylindrique 291 est par exemple maintenue au niveau de sa deuxième extrémité par une première plaque support 293 s'étendant parallèlement au plateau support 27 et rigidement liée au plateau support 27 par des montants 295, par exemple trois montants 295. Les montants 295 sont par exemple de forme cylindrique et sont fixés à leur première extrémité à la première plaque support 293 et à leur deuxième extrémité au plateau support 27. La première plaque support 293 a par exemple une forme générale sensiblement triangulaire et les montants 295 sont disposés au niveau des sommets du triangle. Les côtés du triangle peuvent avoir une forme concave pour limiter l'encombrement et le poids de la première plaque support 293.

Le fond mobile du deuxième réservoir 29 est formé par un premier piston 297. Le premier piston 297 est relié rigidement à une première plaque de liaison 31 via une première tige 33. La première plaque de liaison 31 s'étend parallèlement au plateau support 27 et est disposée sous la première plaque support 293. La première plaque support 293 comprend une ouverture centrale permettant le passage de la première tige 33. La première tige 33 est par exemple de forme cylindrique. La première plaque de liaison 31 est configurée pour venir se fixer sur le premier plateau 5 de sorte que le déplacement du premier plateau 5 entraîne le premier piston 293 via la première plaque de liaison 31 et la première tige 33. La fixation de la première plaque de liaison 31 sur le premier plateau 5 est par exemple réalisée par une ou plusieurs fixations magnétiques amovibles 34. La première plaque de liaison 31 a par exemple une forme générale rectangulaire.

De plus, la première plaque support 293 comprend au moins un évent 296 pour permettre un passage d'air vers l'intérieur du deuxième réservoir 29 sous le premier piston 297 afin d'éviter un différentiel de pression lors du déplacement du premier piston 297. La fabrication se faisant généralement sous atmosphère contrôlée avec des aspirations par le haut et par le bas, la présence d'un différentiel de pression au niveau de la plateforme adaptative amovible peut nuire à la fabrication, il convient donc d'utiliser des évents pour éviter ces différentiels de pression.

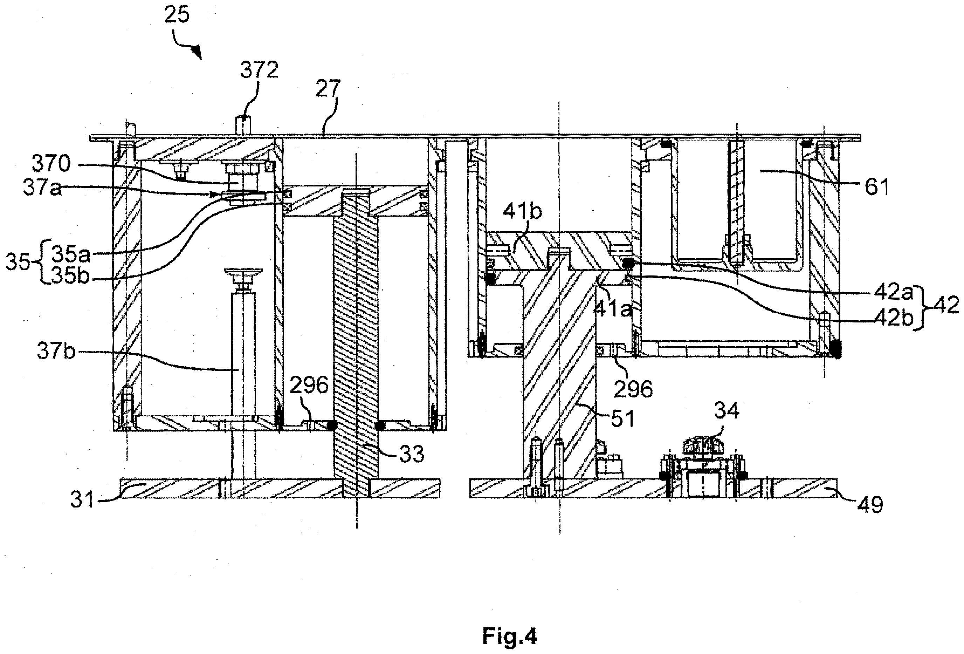

De plus, au moins un joint 35, mieux visible sur la vue en coupe de la figure 4, est disposé entre le premier piston 297 et la première paroi cylindrique 291 pour éviter le passage de la poudre métallique 9 entre la première paroi cylindrique 291 et le premier piston 297 lors du déplacement de ce dernier. Dans le cas présent, deux joints 35a et 35b sont disposés autour du premier piston 297. Chaque joint 35a, 35b est par exemple positionné dans une gorge périphérique. Le premier joint 35a est par exemple un joint en feutre et le deuxième joint 35b est un joint quadrilobe en élastomère. Une telle combinaison permet une bonne étanchéité ainsi qu'une bonne résistance à l'abrasion de la poudre métallique 9.

Le deuxième secteur S2 est configuré pour s'étendre en regard d'une portion de la deuxième zone Z2 lorsque la plateforme adaptative amovible 25 est positionnée dans l'enceinte 100 et comprend un deuxième socle 41 mobile en translation verticale dont la section horizontale est inférieure à celle du premier socle 11. Le deuxième socle 41 est entouré par une paroi périphérique 43 à l'intérieur de laquelle se déplace le deuxième socle 41. La paroi périphérique 43 est par exemple de forme cylindrique et le deuxième socle 41 présente une forme générale de disque.

La paroi périphérique 43 comprend une première extrémité configurée pour venir se positionner dans une ouverture du plateau support 27. La paroi périphérique 43 s'étend sous le plateau support 27 et est par exemple maintenue au niveau de sa deuxième extrémité par une deuxième plaque support 45 rigidement liée au plateau support 27 par des montants 47, par exemple trois montants 47. Les montants 47 sont par exemple de forme cylindrique et sont fixés à leur première extrémité à la deuxième plaque support 45 et à leur deuxième extrémité au plateau support 27. La deuxième plaque support 45 s'étend parallèlement au plateau support 27 et a par exemple une forme générale sensiblement triangulaire et les montants 47 sont disposés au niveau des sommets du triangle. Les côtés du triangle peuvent avoir une forme concave pour limiter l'encombrement et le poids de la deuxième plaque support 45.

Le deuxième socle 41 peut être réalisé en deux parties : un support 41a et une partie supérieure de fabrication amovible 41b. La partie supérieure de fabrication amovible 41b peut être fixée au support 41a par des vis. L'utilisation d'une surface de fabrication amovible 41b permet de faciliter la récupération et la manipulation de la pièce obtenue par le procédé de fabrication additive.

Le support 41a peut comprendre au moins une gorge périphérique pour recevoir un joint d'étanchéité 42 entre le support 41a et la paroi périphérique 43. Au moins une des gorges périphériques peut également être ménagée sur la partie supérieure de fabrication amovible 41b. Dans le cas présent, le support 41a comprend une gorge périphérique configurée pour recevoir respectivement un troisième joint 42a et la partie supérieure de fabrication amovible 41b est configurée pour recevoir un quatrième joint 42b mieux visibles sur la figure 4. Le troisième joint 42a est par exemple réalisé en feutre et le quatrième joint 42b est par exemple un joint quadrilobe en matériau élastomère.

Le support 41a est rigidement lié à une deuxième plaque de liaison 49 via une deuxième tige 51. La deuxième plaque de liaison 49 s'étend parallèlement au plateau support 27 et est disposée sous la deuxième plaque support 45. La deuxième plaque support 45 comprend une ouverture centrale permettant le passage de la deuxième tige 51. La deuxième tige 51 est par exemple de forme cylindrique. La deuxième plaque de liaison 49 est configurée pour venir se fixer sur le premier socle 11 de sorte que le déplacement du premier socle 11 entraîne le deuxième socle 41 via la deuxième tige 51 et la deuxième plaque de liaison 49. La fixation de la deuxième plaque de liaison 49 sur le premier socle 11 est par exemple réalisée par une ou plusieurs fixations magnétiques amovibles 34. La deuxième plaque de liaison 49 a par exemple une forme générale rectangulaire.

De plus, la deuxième plaque support 45 comprend au moins un évent 296 pour permettre un passage d'air vers l'intérieur de la paroi périphérique 43 sous le deuxième socle 41 afin d'éviter un différentiel de pression lors du déplacement du deuxième socle 41.

Le troisième secteur S3 est configuré pour s'étendre en regard d'une portion de la deuxième zone Z2 lorsque la plateforme adaptative amovible 25 est positionnée dans l'enceinte 100 et comprend un troisième réservoir 61 destiné à récupérer au moins une partie de la poudre métallique 9 non utilisée lors de la fabrication additive. Le troisième réservoir 61 a par exemple une forme générale cylindrique et est amovible de manière à faciliter son vidage et son nettoyage à la fin du procédé de fabrication.

La plateforme adaptative amovible 25 comprend également un deuxième élément racleur 63 configuré pour être déplacé horizontalement par le bras mobile 19 de l'équipement 1 entre une troisième position (qui peut correspondre à la première position) située d'un premier côté du plateau support 27 proche du secteur S1 et une quatrième position (qui peut correspondre à la deuxième position) située d'un deuxième côté, opposé au premier côté, du plateau support 27 du côté du troisième secteur S3 . Le deuxième élément racleur 63 est par exemple fixé sur le bras mobile 19 par des vis. Le deuxième élément racleur 63 est par exemple fixé au bras mobile 19 en lieu et place du premier élément racleur 21. Le deuxième élément racleur 63 est par exemple réalisé en plastique souple, notamment en silicone pour limiter sa détérioration par la poudre métallique 9.

La plateforme adaptative amovible 25 comprend également au moins un dispositif d'arrêt 37 visant à limiter le déplacement vertical du premier piston 297 à un niveau correspondant sensiblement à la position du plateau support 27 de manière à éviter une saillie du premier piston 297 au-dessus du plateau support 27 ce qui pourrait conduire à une dégradation du deuxième élément racleur 63 en cas de contact entre le deuxième élément racleur 63 et le premier piston 297.

Le dispositif d'arrêt 37 est par exemple placé au niveau d'une partie latérale P1, P3 entre la troisième position et le premier secteur S1. Dans le cas présent deux dispositifs d'arrêt 37 sont placés respectivement sur la première P1 et la deuxième P3 parties latérales. Le dispositif d'arrêt 37 comprend par exemple une première partie 37a fixée sur le plateau support 27 et une deuxième partie 37b liée rigidement à la première plaque de liaison 31 et configurée pour venir en contact avec la première partie 37a lorsque le premier piston 297 atteint la hauteur du plateau support 27.

La première partie 37a comprend par exemple une base 370 disposée dans une ouverture du plateau support 27 et un coulisseau 372 configuré pour se déplacer en translation dans la base 370 entre une position basse située sous le niveau du plateau support 27 et une position haute dans laquelle le coulisseau 372 fait saillie au-dessus du plateau support 27 comme représenté sur la figure 3. En fonctionnement, le coulisseau 372 est contraint en position basse dans laquelle il vient contraindre un élément élastique, par exemple un ressort, et dans laquelle il est retenu par un élément de retenue et est configuré pour passer en position haute lorsque la deuxième partie 37b vient en contact avec la première partie 37a ce qui provoque le déplacement de l'élément de retenue et libère le coulisseau 372. Le coulisseau 372 est ainsi entraîné vers la position haute par l'élément élastique de la première partie 37a.

La deuxième partie 37b est par exemple formée par une tige de forme générale cylindrique s'étendant depuis la première plaque de liaison 31 vers la première partie 37a du dispositif d'arrêt 37.

Ainsi, le déplacement vertical de la première plaque de liaison 31 vers le haut entraîne le déplacement du premier piston 297 et de la deuxième partie 37b du dispositif d'arrêt 37, cette dernière venant en contact avec la première partie 37a du dispositif d'arrêt 37 lorsque le premier piston 297 atteint le niveau du plateau support 27. Le contact entre la première partie 37a et la deuxième partie 37b entraîne le passage du coulisseau 372 de la position basse à la position haute où il fait saillie au-dessus du plateau support 27. Dans sa position haute, le coulisseau 372 vient faire obstacle à un support du deuxième élément racleur 63 de sorte à bloquer le déplacement du deuxième élément racleur 63 vers le secteur S1.

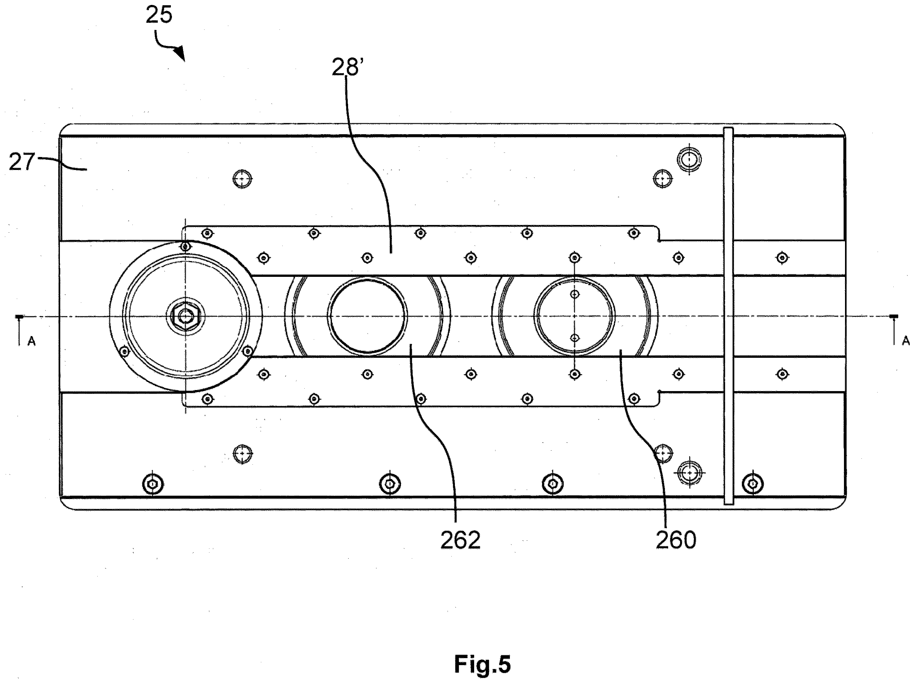

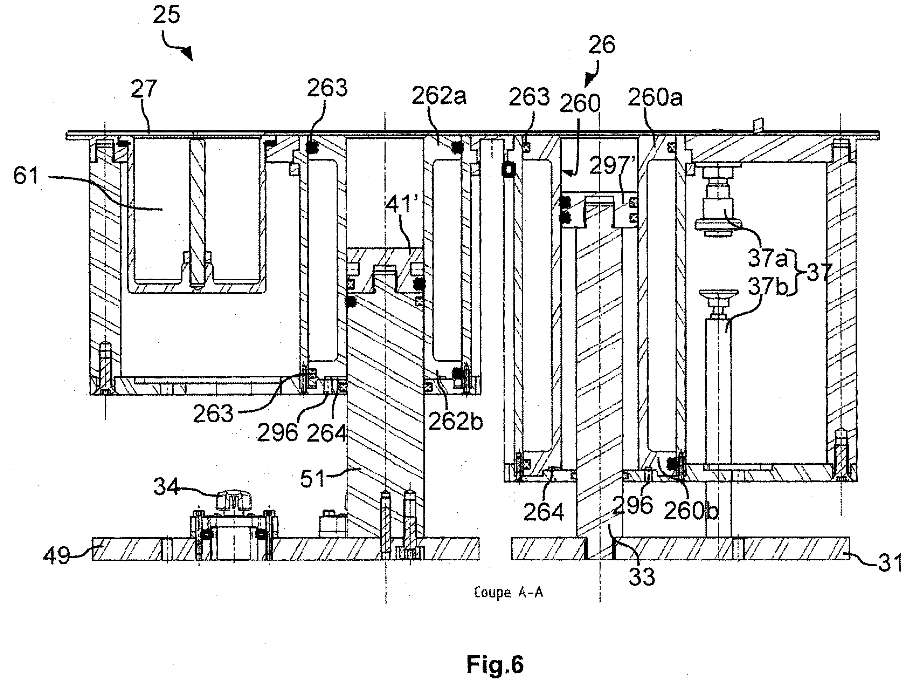

Selon un deuxième mode de réalisation représenté sur les figures 5 et 6, la plateforme adaptative amovible 25 peut également comprendre un sous-système de réduction 26. La figure 6 représente une vue en coupe selon l'axe A-A de la figure 5 qui est une vue de dessus de la plateforme adaptative amovible 25. Le sous-système de réduction 26 comprend une première entretoise 260 et une deuxième entretoise 262 destinées à venir se positionner respectivement dans le deuxième réservoir 29 et à l'intérieur de la paroi périphérique 43 entourant le deuxième socle 41' de manière à permettre d'adapter la taille du réservoir de poudre métallique et de la zone de fusion à des dimensions inférieures, par exemple pour réaliser des essais sur des pièces de taille très réduite.

La première entretoise 260 est par exemple de forme générale tubulaire dont le cylindre intérieur définit le réservoir de poudre. Des collerettes supérieure 260a et inférieures 260b sont disposées aux extrémités du tube et sont destinées à venir en contact avec la première paroi cylindrique 291. Les collerettes inférieure 260b et supérieure 260a comprennent par exemple une gorge périphérique 263 configuré pour recevoir un joint afin d'éviter un passage de poudre métallique 9 entre la première entretoise 260 et la première paroi cylindrique 291. La collerette inférieure 260b est configurée pour venir en contact avec la première plaque support 293 et comprend également un canal 264 pour permettre une communication d'air entre l'évent 296 de la première paroi cylindrique 291 et la partie centrale de l'entretoise 260. Le canal 264 est par exemple formé par une première rainure annulaire destinée à venir en regard de l'évent 296 couplée à une deuxième rainure radiale débouchant dans la partie centrale de la première entretoise 260. Dans ce mode de réalisation, le premier piston 297' a un diamètre correspondant au diamètre du cylindre intérieure de la première entretoise 260.

La deuxième entretoise 262 est par exemple de forme générale tubulaire dont le cylindre intérieur définit la taille du socle destiné à recevoir la pièce fabriquée. Des collerettes supérieure 262a et inférieures 262b sont disposées aux extrémités du tube et sont destinées à venir en contact avec la paroi périphérique 43. Les collerettes inférieure 262b et supérieure 262a comprennent par exemple une gorge périphérique 263 configuré pour recevoir un joint afin d'éviter un passage de poudre métallique 9 entre la deuxième entretoise 262 et la paroi périphérique 43. La collerette inférieure 262b est configurée pour venir en contact avec la deuxième plaque support 45 et comprend également un canal 264 pour permettre une communication d'air entre l'évent 296 de la première paroi cylindrique 291 et la partie centrale de l'entretoise 260. Le canal 264 est par exemple formé par une première rainure annulaire destinée à venir en regard de l'évent 296 couplée à une deuxième rainure radiale débouchant dans la partie centrale de la deuxième entretoise 262. Dans ce mode de réalisation, le deuxième socle 41' a un diamètre correspondant au diamètre du cylindre intérieure de la deuxième entretoise 262.

Le sous-système de réduction 26 comprend également des rails de délimitation élargis 28' destinés à remplacer les rails de délimitation et dont la largeur est adaptée de sorte que la distance entre les rails de délimitation élargis 28' correspond sensiblement au diamètre du cylindre intérieur des entretoises 260 et 262. Ces rails de délimitation élargis 28' sont par exemple vissés d'une part sur la plateau support 27 et d'autre part sur les entretoises 260 et 262 ce qui permet d'assurer le maintien en position des entretoises 260 et 262 lors de la fabrication.

La taille des entretoises 260, 262 et des rails de délimitation élargis 28' peut être ajustée en fonction de la taille de la pièce à fabriquer.

Ainsi, la plateforme adaptative amovible 25 permet de définir différentes tailles de réservoir et de zone de fabrication de manière à optimiser la quantité de poudre métallique 9 utilisée en fonction de la taille de la pièce à fabriquer ce qui permet notamment de réaliser des essais pour déterminer les différents paramètres de fabrication en utilisant un minimum de poudre métallique 9.

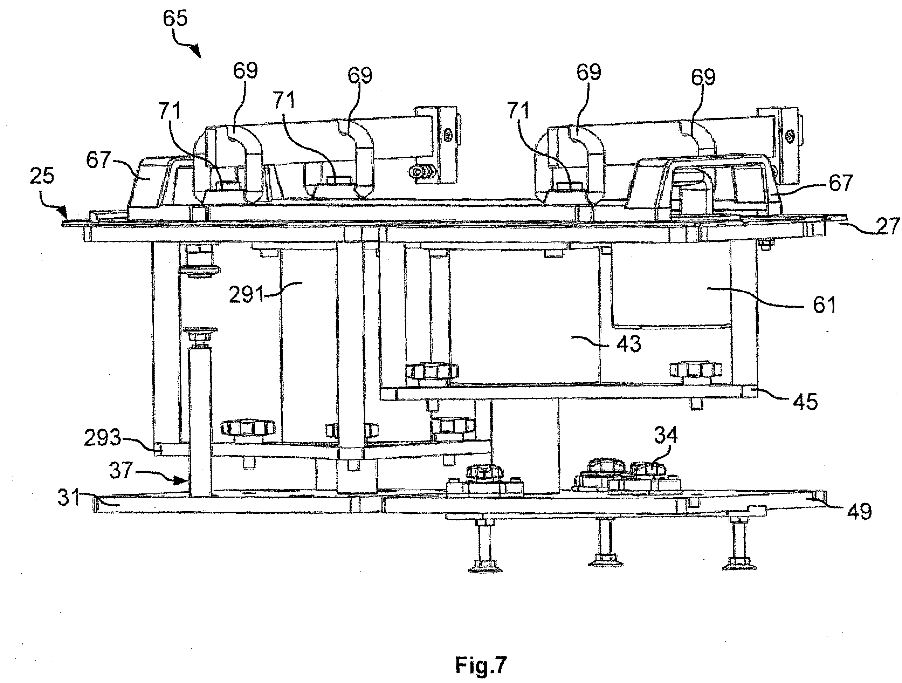

La plateforme adaptative amovible 25 peut également comprendre des moyens de transport amovibles 65 visibles sur la figure 7, par exemple un dispositif comprenant des poignées 67 pour permettre une préhension aisée de la plateforme 25 ainsi que des crochets ou anneaux 69 pour faciliter le stockage de la plateforme adaptative amovible 25 lorsque cette dernière n'est pas utilisée. Les moyens de transport amovibles 65 sont par exemple fixés à la plateforme par des vis 71 configurées pour venir dans des trous filetés disposés au niveau des parties latérales P1, P3 du plateau support 27.

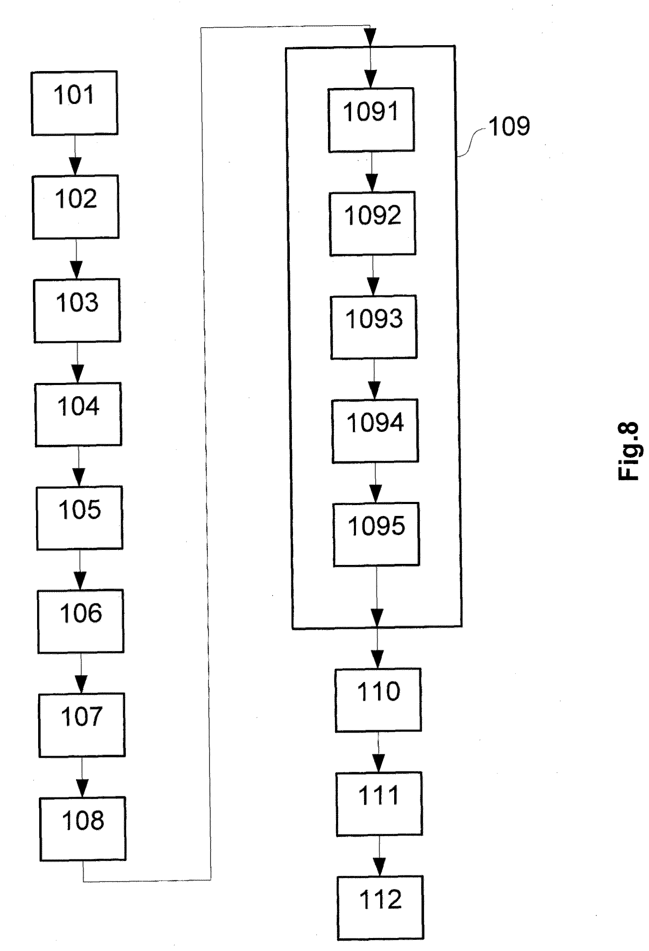

Les différentes étapes d'un procédé de fabrication additive utilisant la plateforme adaptative amovible 25 vont maintenant être décrites à partir de la figure 8.

La première étape 101 est une étape préliminaire de configuration de l'enceinte 100 de l'équipement de fabrication additive métallique par fusion laser 1. L'enceinte 100 est configurée de manière à placer le bras mobile 19 dans une position extrême, par exemple la deuxième position, pour permettre l'installation de la plateforme adaptative amovible 25 dans l'enceinte 100. Le premier plateau 5 et le premier socle 11 peuvent être placés dans une position haute, par exemple au niveau du cadre support 17.

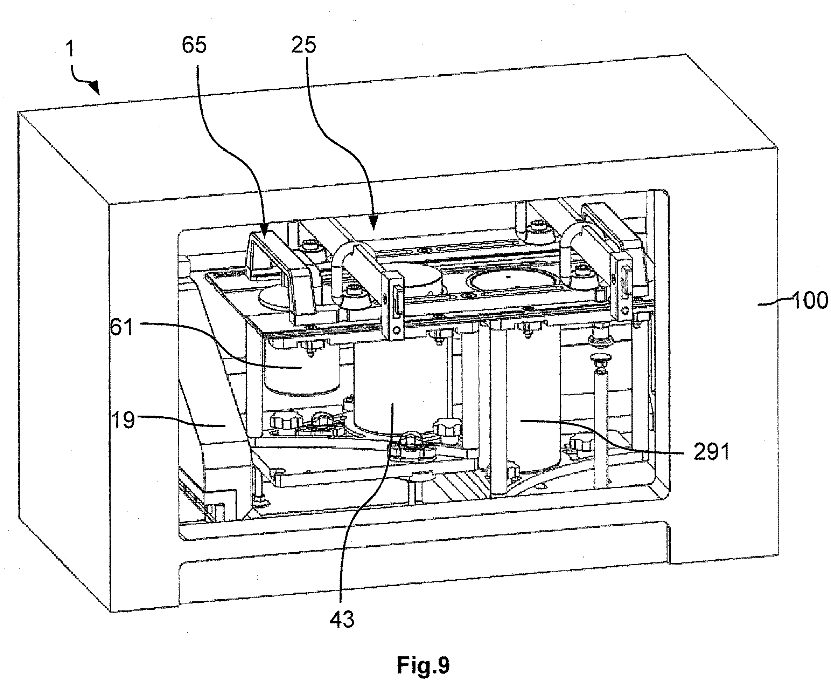

La deuxième étape 102 correspond au placement de la plateforme adaptative amovible 25 dans l'enceinte 100 comme représenté sur la figure 9. La plateforme adaptative amovible 25 est par exemple disposée dans l'enceinte par un opérateur grâce aux moyens de transport amovibles 65.

La troisième étape 103 correspond à la fixation de la première plaque de liaison 31 sur le premier plateau 5 et à la fixation de la deuxième plaque de liaison 49 sur le premier socle 11, par une ou plusieurs fixations magnétiques 34.

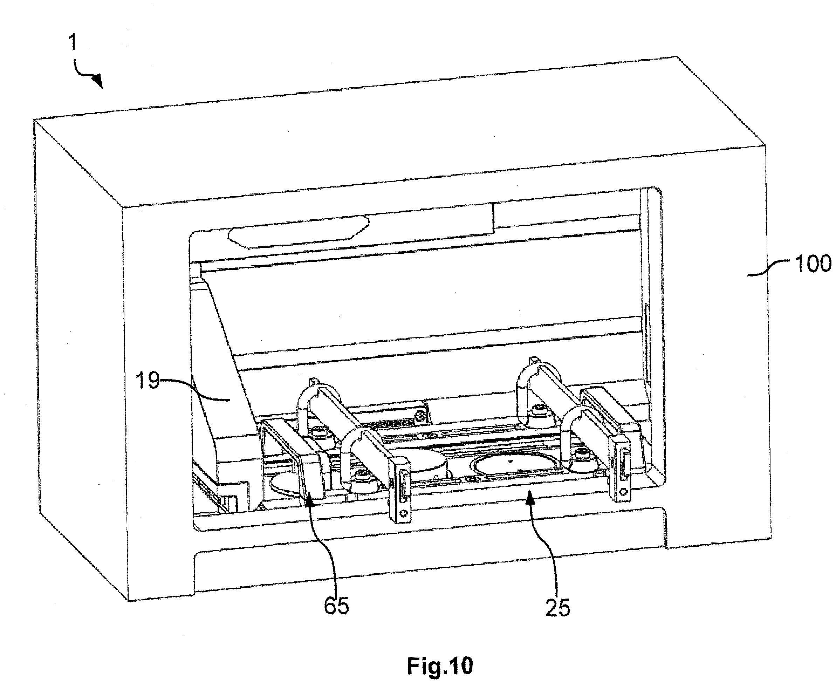

La quatrième étape 104 correspond au placement du plateau support 27 de la plateforme sur le cadre support 17 de l'enceinte 100 comme représenté sur la figure 10. Pour cela, le premier plateau 5 et le premier socle 11 sont placés en position basse via la commande des premier 7 et deuxième 13 vérins. Le plateau support 27 est fixé au cadre support 17, par des cames de serrage 30. D'autres moyens de fixation du plateau support 27 sur le cadre support 17 peuvent également être utilisés.

La cinquième étape 105 (qui peut être une étape optionnelle en cas de non-utilisation des moyens de transport amovibles) correspond au retrait des moyens de transport amovibles 65 de la plateforme adaptative amovible 25. Le retrait est par exemple réalisé en dévissant les vis de fixation 71 des moyens de transport amovibles 65 et en retirant les moyens de transport amovibles 65 de l'enceinte 100.

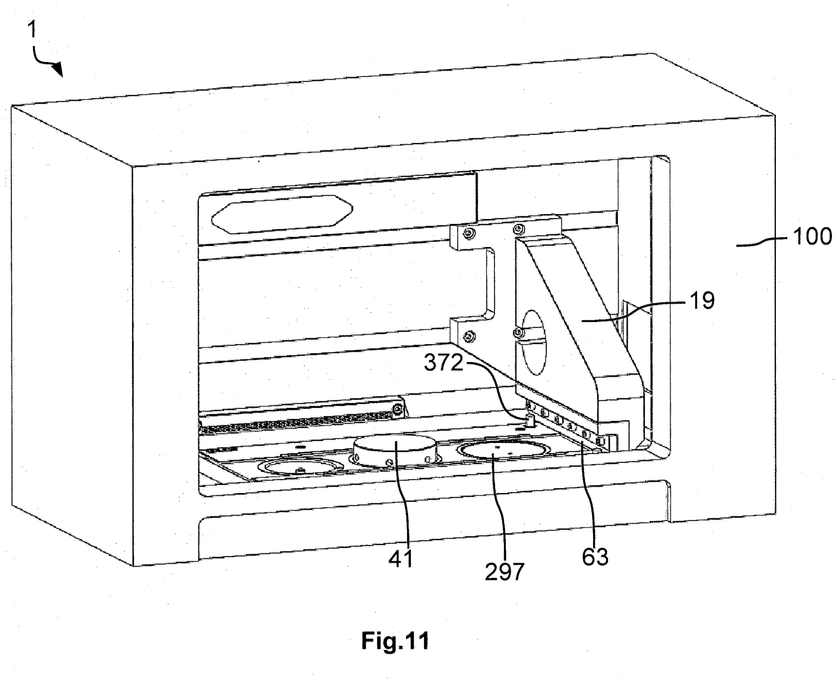

La sixième étape 106 correspond à la fixation de l'élément racleur 63 sur le bras mobile 19. L'élément racleur 63 peut être disposé sur un adaptateur. La fixation de l'adaptateur sur le bras mobile 19 est par exemple réalisé par des vis. L'élément racleur 63 est ensuite positionné dans la troisième position comme représenté sur la figure 11.

La septième étape 107 correspond au remplissage du deuxième réservoir 29 avec de la poudre métallique. Le volume du deuxième réservoir 29 peut être adapté en ajustant la hauteur du premier piston 297 via la commande du premier vérin 7. La poudre métallique 9 peut être étalée dans le deuxième réservoir 29 de manière à former une surface sensiblement horizontale.

La huitième étape 108 correspond au placement du deuxième socle 41 à la hauteur du plateau support 27. De manière optionnelle, le(s) coulisseau(x) 372 du ou des dispositif(s) d'arrêt 37 peu(ven)t également être placé(s) en position basse (si ce n'est pas déjà le cas).

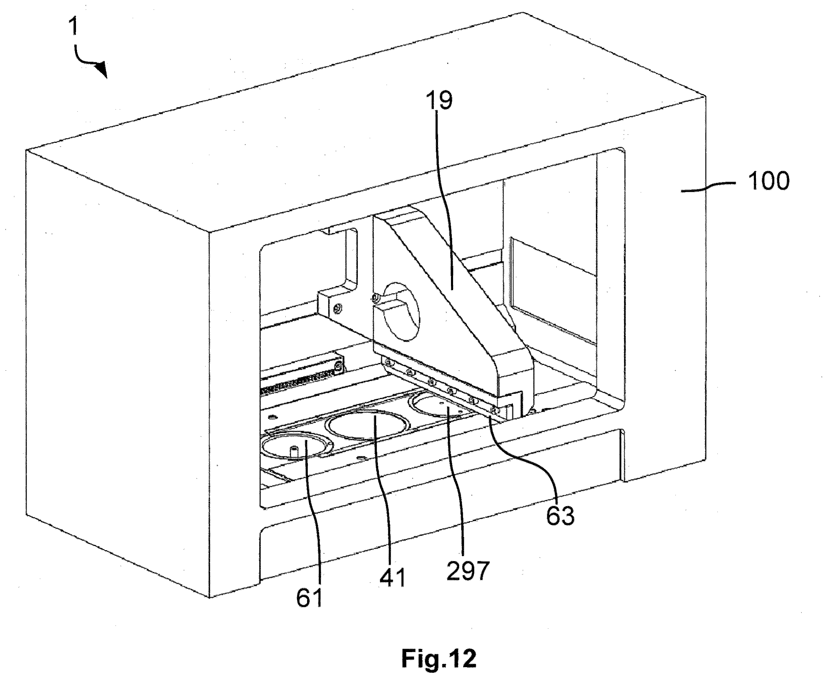

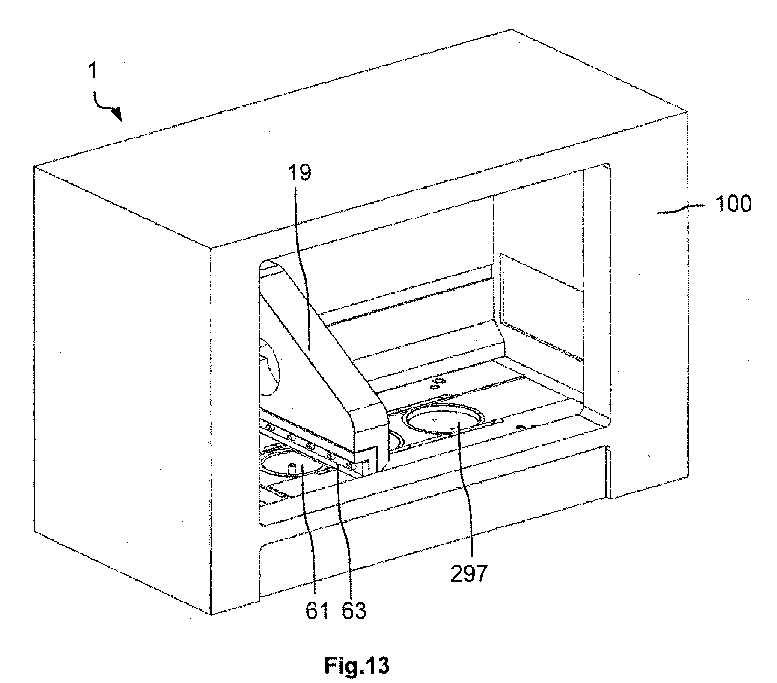

La dixième étape 109 correspond à une étape de fabrication qui est répétée de manière itérative jusqu'à la fin de procédé de fabrication. L'étape de fabrication comprend les cinq sous-étapes 1091 à 1095 :
- la première sous-étape 1091 dans laquelle le premier vérin 7 déplace le premier piston 297 vers le haut d'un incrément prédéterminé correspondant à une quantité prédéterminée de particules de poudre métallique 9, par exemple 70µm.
- la deuxième sous-étape 1092 dans laquelle le bras mobile 19 se déplace de la troisième position vers la quatrième position pour répartir la couche de poudre métallique 9 de manière sensiblement uniforme dans le deuxième secteur S2 via l'élément racleur 63. L'excédant de poudre métallique étant déversé dans le troisième réservoir 61. Les figures 12 et 13 représentent le bras mobile 19 dans des positions intermédiaires entre la troisième et la quatrième position.
- la troisième sous-étape 1093 dans laquelle le faisceau laser du dispositif d'émission laser 15 est transmis vers les emplacements du deuxième secteur S2 comprenant les particules de poudre métallique 9 à fusionner. Le temps de radiation laser ainsi que la puissance des radiations sont ajustés en fonction du type de poudre métallique, notamment du métal utilisé ou de la taille des particules. Ces paramètres peuvent être modifiés d'un emplacement à un autre de manière à déterminer les paramètres de fusion optimaux pour la poudre métallique 9 considéré.
- la quatrième sous-étape 1094 dans laquelle le deuxième vérin 13 déplace le deuxième socle 41 d'un incrément prédéterminé vers le bas correspondant à une couche de particules de poudre métallique 9, par exemple 40µm.
- la cinquième sous-étape 1095 dans laquelle le bras mobile 19 se déplace de la quatrième position vers la troisième position.

Les différentes sous-étapes 1091 à 1095 de l'étape 109 sont ensuite répétées jusqu'à l'obtention de la pièce voulue (ou jusqu'à l'arrêt du procédé par le dispositif d'arrêt 37) grâce à la fusion des différentes couches de particules de poudre métallique 9.

En fin de fabrication additive, le procédé peut également comprendre les étapes suivantes :
La dixième étape 110 dans laquelle les restes de poudre métallique présents dans l'enceinte 100 sont balayés vers le deuxième réservoir 61 ou aspirés, par exemple par un dispositif d'aspiration de l'enceinte 100 ou un dispositif d'aspiration externe. Le deuxième réservoir 61 peut alors être retiré de la plateforme 25 pour être vidé.

La onzième étape 111 correspond à la récupération de la pièce métallique issue de la fabrication additive. Cette récupération peut être réalisée en détachant la partie supérieure de fabrication amovible 41b du deuxième socle 41.

La douzième étape 112 correspond au retrait de la plateforme 25 de l'enceinte 100. Pour cela, le bras mobile 19 peut être positionné dans la deuxième position, les moyens de transport 65 peuvent être fixés sur la plateforme 25 , les cames de serrage 30 sont dévissées, le premier plateau 5 et le premier socle 11 peuvent être positionnés en position haute par la commande des premier 7 et deuxième 13 vérins. Les fixations magnétiques 34 entre la première plaque de liaison 31 et le premier plateau 5 d'une part et la deuxième plaque de liaison 49 et le premier socle 11 d'autre part sont retirées. Les première et deuxième plaque de liaison 31 et 49 peuvent alors être fixées respectivement aux première et deuxième plaques support 293 et 45. La plateforme 25 peut alors être retirée par un opérateur de l'enceinte 100.

Ainsi, l'utilisation d'une plateforme adaptative amovible 25 telle que décrite précédemment permet d'utiliser une enceinte 100 de grande capacité couplée à un dispositif d'émission laser 15 de forte puissance tout en réduisant la quantité de poudre nécessaire à la réalisation d'une pièce métallique notamment de taille réduite, par exemple inférieure à 10 cm, ce qui permet notamment de réaliser des essais pour déterminer les paramètres de fabrication avec une quantité limitée de poudre. Cela permet également d'éviter l'utilisation de plusieurs équipements de fabrication additive 1 pour réaliser d'une part les essais et d'autre part la fabrication. Ainsi, l'utilisation d'une telle plateforme adaptative amovible 25 permet de réduire les coûts d'une fabrication additive.

## Revendications

1. Plateforme adaptative amovible de fabrication additive (25) pour un équipement de fabrication additive métallique par fusion laser (1), ledit équipement (1) comprenant :
- une enceinte de production (100) comprenant :
- un cadre support (17) délimitant :
- une première zone (Z1) dite d'alimentation de poudre métallique (9) comprenant un premier réservoir (3) dont le fond est réalisé par un premier plateau (5) mobile en translation verticale,
- une deuxième zone (Z2) dite de fabrication adjacente à la première zone (Z1) et comprenant un premier socle (11) mobile en translation verticale,
- un dispositif d'émission laser (15) configuré pour fusionner des particules de poudre métallique (9) disposées dans la deuxième zone (Z2),
- un bras mobile (19) en translation horizontale et configuré pour déplacer un élément racleur (21, 63) entre une première position et une deuxième position, les première (Z1) et deuxième (Z2) zones étant situées entre la première et la deuxième position, de manière à répartir des particules de poudre métallique (9) dans la deuxième zone (Z2),
ladite plateforme (25) comprenant :
- un plateau support (27) configuré pour venir se placer sur le cadre support (17) de l'enceinte (100) s'étendant autour des première (Z1) et deuxième (Z2) zones et pour recouvrir au moins partiellement les première (Z1) et deuxième (Z2) zones, le plateau support (27) comprenant :
- un premier secteur (S1) dit d'alimentation réduite de poudre métallique (9) configuré pour s'étendre en regard d'une portion de la première zone (Z1) et comprenant un deuxième réservoir (29) dont la section horizontale est inférieure à celle du premier réservoir (3) et dont le fond mobile est formé par un premier piston (297) configuré pour être solidaire en déplacement du premier plateau (5) via une première plaque de liaison (31) solidaire du premier piston (297) et configurée pour être fixée au premier plateau (5) par une fixation magnétique (34),
- un deuxième secteur (S2) dit de fabrication réduite adjacent au premier secteur (S1) et configuré pour s'étendre en regard d'une portion de la deuxième zone (Z2) et comprenant un deuxième socle (41) mobile en translation verticale à l'intérieur d'une paroi périphérique (43) et dont la section horizontale est inférieure à celle du premier socle (11), le deuxième socle (41) étant configuré pour être solidaire en déplacement du premier socle (11) via une deuxième plaque de liaison (49) solidaire du deuxième socle (41) et configurée pour être fixée au premier socle (11) par une fixation magnétique (34),
- un troisième secteur (S3) dit de récupération adjacent au deuxième secteur (S2) et configuré pour s'étendre en regard d'une portion de la deuxième zone (Z2)
- un dispositif d'arrêt (37) de l'élément racleur (63) pour éviter un contact entre l'élément racleur (63) et le premier piston (297) si ledit premier piston (297) venait à dépasser le niveau du plateau support (27), le dispositif d'arrêt comprenant :
- une première partie (37a) solidaire du plateau support (27) comprenant :
- une base (370),
- un coulisseau (372) configuré pour se déplacer axialement dans la base (370) entre une positon basse située sous le plateau support (27) et une position haute dans laquelle le coulisseau (372) fait saillie au-dessus du plateau support (27),
- une deuxième partie (37b) solidaire de la première plaque de liaison (31) et configurée pour venir appuyer sur le coulisseau (372) lorsque la première plaque de liaison (31) est dans une position haute.

2. Plateforme adaptative amovible de fabrication additive (25) selon la revendication 1 comprenant également des rails de délimitation (28) disposés de part et d'autre du plateau support (27) et configurés pour délimiter transversalement une zone d'étalement de la poudre métallique (9).

3. Plateforme adaptative amovible de fabrication additive (25) selon la revendication 1 ou 2 dans laquelle le troisième secteur (S3) comprend un troisième réservoir (61) destiné à recevoir au moins une partie de la poudre métallique (9) raclée par l'élément racleur (63) dans le troisième secteur (S3).

4. Plateforme adaptative amovible de fabrication additive (25) selon la revendication 3 dans laquelle le troisième réservoir (61) est un réservoir amovible pour permettre de vider la poudre métallique (9) récupérée.

5. Plateforme adaptative amovible de fabrication additive (25) selon l'une des revendications précédentes dans laquelle le premier réservoir (3) a une forme parallélépipédique rectangle et le deuxième réservoir (29) a une forme cylindrique, le premier socle (11) a une section horizontale de forme rectangulaire et le deuxième socle (41) a une section horizontale de forme circulaire.

6. Plateforme adaptative amovible de fabrication additive (25) selon l'une des revendications précédentes dans laquelle le deuxième réservoir (29) comprend au moins un joint d'étanchéité (35) disposé entre le premier piston (297) et une paroi (291) du deuxième réservoir (29).

7. Plateforme adaptative amovible de fabrication additive (25) selon la revendication 6 dans lequel le deuxième réservoir (29) comprend un premier (35a) et un deuxième (35b) joints d'étanchéité disposés dans des gorges périphériques ménagées dans le premier piston (297), le premier joint d'étanchéité (35a) étant un joint en feutre et le deuxième joint d'étanchéité (35b) étant un joint de type quadrilobe en élastomère.

8. Plateforme adaptative amovible de fabrication additive (25) selon l'une des revendications précédentes dans laquelle le deuxième socle (41) comprend un support (41a) et une surface supérieure de fabrication amovible (41b).

9. Plateforme adaptative amovible de fabrication additive (25) selon la revendication 8 dans laquelle la surface supérieure de fabrication amovible (41b) est fixée sur le support (41a) par vissage.

10. Plateforme adaptative amovible de fabrication additive (25) selon l'une des revendications précédentes comprenant également des moyens de transport amovibles (65) configurés pour être fixés sur le plateau support (27) pour faciliter la manipulation de la plateforme (25) lors de sa mise en place ou de son enlèvement de l'enceinte de production (100).

11. Plateforme adaptative amovible de fabrication additive (25) selon l'une des revendications précédentes comprenant également :
- une première plaque support (293) rigidement liée au plateau support (27), formant le fond du deuxième réservoir (29) et comprenant un évent (296), la première plaque support (293) comprenant une ouverture centrale permettant le passage d'une première tige (33) reliant rigidement le premier piston (297) à une première plaque de liaison (31) configurée pour être fixée sur le premier plateau (5) et,
- une deuxième plaque support (45) rigidement liée au plateau support (27), disposée contre l'extrémité basse de la paroi périphérique (43) et comprenant un évent (296), la deuxième plaque support (45) comprenant une ouverture centrale permettant le passage d'une deuxième tige (51) reliant rigidement un support (41a) du deuxième socle (41), à une deuxième plaque de liaison (49) configurée pour être fixée sur le premier socle (11).

12. Plateforme adaptative amovible de fabrication additive (25) selon l'une des revendications précédentes comprenant également un sous-système de réduction (26) comprenant une première entretoise (260) et une deuxième entretoise (262) destinées à venir se positionner respectivement dans le deuxième réservoir (29) et à l'intérieur de la paroi périphérique (43) de manière à permettre d'adapter la taille du réservoir de poudre métallique et de la zone de fusion.

13. Plateforme adaptative amovible de fabrication additive (25) selon les revendications 2 et 12 dans laquelle les première (260) et deuxième (262) entretoises sont de forme tubulaire définissant un cylindre intérieur et dans laquelle la largeur des rails de délimitation (28') est adaptée pour que l'écart entre lesdits rails de délimitation corresponde au diamètre du cylindre intérieur des première (260) et deuxième (262) entretoises.

14. Procédé de fabrication additive métallique par fusion laser dans un équipement adapté comprenant :
- une enceinte de production (100) comprenant :
- un cadre support (17) délimitant :
- une première zone (Z1) dite d'alimentation de poudre métallique (9) comprenant un premier réservoir (3) dont le fond est réalisé par un premier plateau (5) mobile en translation verticale,
- une deuxième zone (Z2) dite de fabrication adjacente à la première zone (Z1) et comprenant un premier socle (11) mobile en translation verticale,
- un dispositif d'émission laser (15) configuré pour fusionner des particules de poudre métallique (9) disposées dans la deuxième zone (Z2),
- un bras mobile (19) en translation horizontale et configuré pour déplacer un élément racleur (21, 63) entre une première position et une deuxième position, les première (Z1) et deuxième (Z2) zones étant situées entre la première et la deuxième position, de manière à répartir des particules de poudre métallique (9) dans la deuxième zone (Z2), ledit procédé comprenant également l'utilisation d'une plateforme adaptative amovible (25) comprenant :
- un plateau support (27) configuré pour venir se placer sur le cadre support (17) de l'enceinte (100) s'étendant autour des première (Z1) et deuxième (Z2) zones et pour recouvrir au moins partiellement les première (Z1) et deuxième (Z2) zones, le plateau support (27) comprenant :
- un premier secteur (S1) dit d'alimentation réduite de poudre métallique (9) et comprenant un deuxième réservoir (29) dont la section horizontale est inférieure à celle du premier réservoir (3) et dont le fond est formé par un premier piston (297) configuré pour être solidaire en déplacement du premier plateau (5) via une première plaque de liaison (31) solidaire du premier piston (297) et configurée pour être fixée au premier plateau (5) par une fixation magnétique (34), ,
- un deuxième secteur (S2) dit de fabrication réduite adjacent au premier secteur (S1) et comprenant un deuxième socle (41) mobile en translation verticale dont la section horizontale est inférieure à celle du premier socle (11), le deuxième socle (41) étant configuré pour être solidaire en déplacement du premier socle (11) via une deuxième plaque de liaison (49) solidaire du deuxième socle (41) et configurée pour être fixée au premier socle (11) par une fixation magnétique (34),,
- un troisième secteur (S3) dit de récupération adjacent au deuxième secteur (S2),
- un dispositif d'arrêt (37) de l'élément racleur (63) pour éviter un contact entre l'élément racleur (63) et le premier piston (297) si ledit premier piston (297) venait à dépasser le niveau du plateau support (27), le dispositif d'arrêt comprenant :
- une première partie (37a) solidaire du plateau support (27) comprenant :
- une base (370),
- un coulisseau (372) configuré pour se déplacer axialement dans la base (370) entre une positon basse située sous le plateau support (27) et une position haute dans laquelle le coulisseau (372) fait saillie au-dessus du plateau support (27),
- une deuxième partie (37b) solidaire de la première plaque de liaison (31) et configurée pour venir appuyer sur le coulisseau (372) lorsque la première plaque de liaison (31) est dans une position haute
ledit procédé comprenant les étapes suivantes :
- on place la plateforme adaptative amovible (25) dans l'enceinte (100) de sorte que le premier secteur (S1) vient en regard d'une portion de la première zone (Z1), le deuxième secteur (S2) vient regard d'une portion de la deuxième zone (Z2) et le troisième secteur (S3) vient en regard d'une portion de la deuxième zone (Z2),
- on lie rigidement le premier piston (297) au premier plateau (5) et le deuxième socle (41) au premier socle (11),
- on remplit le deuxième réservoir (29) de poudre métallique,
- on applique itérativement les étapes de fabrication suivantes :
- on déplace, le premier piston (297) d'une hauteur prédéterminée vers le haut de manière à faire sortir une quantité prédéterminée de poudre métallique (9) hors du deuxième réservoir (29),
- on déplace le bras mobile (19) d'une première position située d'un premier côté des premier (S1) et deuxième (S2) secteurs à une deuxième position située du deuxième côté des premier (S1) et deuxième (S2) secteurs de manière à répartir la quantité prédéterminée de poudre métallique (9) dans le deuxième secteur (S2) via l'élément racleur (63),
- on transmet un faisceau laser issu du dispositif d'émission laser (15) vers des emplacements prédéterminés du deuxième secteur (S2) comprenant les particules de poudre métallique (9) à fusionner,
- on déplace le deuxième socle (41) d'une hauteur prédéterminée vers le bas correspondant à une couche de particules de poudre métallique (9),
- on replace le bras mobile (19) dans sa première position.

## Patentansprüche

1. Wechselbare anpassungsfähige Plattform zur generativen Fertigung (25) für einen Apparat zur generativen Metallfertigung durch Laserschmelzen (1), wobei der Apparat (1) Folgendes beinhaltet:
- ein Produktionsgehäuse (100), das Folgendes beinhaltet:
- einen Trägerrahmen (17), der Folgendes begrenzt:
- eine erste sogenannte Zufuhrzone (Z1) für Metallpulver (9), die einen ersten Behälter (3) beinhaltet, dessen Boden durch eine erste vertikal verfahrbare Tafel (5) verwirklicht ist,
- eine zweite sogenannte Fertigungszone (Z2), die an die erste Zone (Z1) angrenzt und einen ersten vertikal verfahrbaren Sockel (11) beinhaltet,
- eine Laseremissionsvorrichtung (15), die dazu konfiguriert ist, Metallpulverpartikel (9), die in der zweiten Zone (Z2) angeordnet sind, zu schmelzen,
- einen horizontal verfahrbaren Arm (19), der dazu konfiguriert ist, ein Abstreifelement (21, 63) zwischen einer ersten Position und einer zweiten Position zu bewegen, wobei sich die erste (Z1) und die zweite (Z2) Zone zwischen der ersten und der zweiten Position befinden, um Metallpulverpartikel (9) in der zweiten Zone (Z2) zu verteilen,
wobei die Plattform (25) Folgendes beinhaltet:
- eine Trägertafel (27), die dazu konfiguriert ist, auf dem Trägerrahmen (17) des Gehäuses (100), der sich um die erste (Z1) und die zweite (Z2) Zone erstreckt, zu liegen zu kommen und die erste (Z1) und die zweite (Z2) Zone mindestens teilweise zu bedecken, wobei die Trägertafel (27) Folgendes beinhaltet:
- einen ersten sogenannten Sektor (S1) mit reduzierter Zufuhr von Metallpulver (9), der dazu konfiguriert ist, sich gegenüber einem Abschnitt der ersten Zone (Z1) zu erstrecken, und der einen zweiten Behälter (29) beinhaltet, dessen horizontaler Querschnitt kleiner als derjenige des ersten Behälters (3) ist und dessen verfahrbarer Boden durch einen ersten Kolben (297) gebildet wird, der dazu konfiguriert ist, mit der ersten Tafel (5) über eine erste Verbindungsplatte (31) integral bewegbar zu sein, welche mit dem ersten Kolben (297) fest verbunden ist und dazu konfiguriert ist, durch eine magnetische Befestigung (34) an der ersten Tafel (5) befestigt zu sein,
- einen zweiten sogenannten Sektor (S2) mit reduzierter Fertigung, der an den ersten Sektor (S1) angrenzt und dazu konfiguriert ist, sich gegenüber einem Abschnitt der zweiten Zone (Z2) zu erstrecken, und der einen zweiten vertikal verfahrbaren Sockel (41) im Inneren einer Umfangswand (43) beinhaltet, dessen horizontaler Querschnitt kleiner als derjenige des ersten Sockels (11) ist, wobei der zweite Sockel (41) dazu konfiguriert ist, mit dem ersten Sockel (11) über eine zweite Verbindungsplatte (49) integral bewegbar zu sein, welche mit dem zweiten Sockel (41) fest verbunden ist und dazu konfiguriert ist, durch eine magnetische Befestigung (34) an dem ersten Sockel (11) befestigt zu sein,
- einen dritten sogenannten Auffangsektor (S3), der an den zweiten Sektor (S2) angrenzt und dazu konfiguriert ist, sich gegenüber einem Abschnitt der zweiten Zone (Z2) zu erstrecken,
- eine Vorrichtung zum Stoppen (37) des Abstreifelements (63), um einen Kontakt zwischen dem Abstreifelement (63) und dem ersten Kolben (297) zu verhindern, wenn der erste Kolben (297) das Niveau der Trägertafel (27) überschreiten sollte, wobei die Stoppvorrichtung Folgendes beinhaltet:
- einen ersten Teil (37a), der mit der Trägertafel (27) fest verbunden ist, beinhaltend:
- eine Basis (370),
- einen Schieber (372), der dazu konfiguriert ist, sich in der Basis (370) zwischen einer unteren Position, die sich unter der Trägertafel (27) befindet, und einer oberen Position, in der der Schieber (372) oberhalb der Trägertafel (27) vorsteht, axial zu bewegen,
- einen zweiten Teil (37b), der mit der ersten Verbindungsplatte (31) fest verbunden ist und dazu konfiguriert ist, gegen den Schieber (372) zu drücken, wenn sich die erste Verbindungsplatte (31) in einer hohen Position befindet.

2. Wechselbare anpassungsfähige Plattform zur generativen Fertigung (25) nach Anspruch 1, ferner beinhaltend Begrenzungsschienen (28), die auf beiden Seiten der Trägertafel (27) angeordnet sind und dazu konfiguriert sind, eine Ausbreitungszone des Metallpulvers (9) in Querrichtung zu begrenzen.

3. Wechselbare anpassungsfähige Plattform zur generativen Fertigung (25) nach Anspruch 1 oder 2, wobei der dritte Sektor (S3) einen dritten Behälter (61) beinhaltet, der dazu bestimmt ist, mindestens einen Teil des Metallpulvers (9), das durch das Abstreifelement (63) in den dritten Sektor (S3) abgestreift wird, aufzunehmen.

4. Wechselbare anpassungsfähige Plattform zur generativen Fertigung (25) nach Anspruch 3, wobei der dritte Behälter (61) ein wechselbarer Behälter ist, um das Ausleeren des aufgefangenen Metallpulvers (9) zu gestatten.

5. Wechselbare anpassungsfähige Plattform zur generativen Fertigung (25) nach einem der vorhergehenden Ansprüche, wobei der erste Behälter (3) eine rechteckige Parallelepiped-Form aufweist und der zweite Behälter (29) eine Zylinderform aufweist, wobei der erste Sockel (11) einen horizontalen Querschnitt rechteckiger Form aufweist und der zweite Sockel (41) einen horizontalen Querschnitt kreisförmiger Form aufweist.

6. Wechselbare anpassungsfähige Plattform zur generativen Fertigung (25) nach einem der vorhergehenden Ansprüche, wobei der zweite Behälter (29) mindestens eine Dichtung (35) beinhaltet, die zwischen dem ersten Kolben (297) und einer Wand (291) des zweiten Behälters (29) angeordnet ist.

7. Wechselbare anpassungsfähige Plattform zur generativen Fertigung (25) nach Anspruch 6, wobei der zweite Behälter (29) eine erste (35a) und eine zweite (35b) Dichtung beinhaltet, die in Umfangsnuten angeordnet sind, die in dem ersten Kolben (297) eingerichtet sind, wobei die erste Dichtung (35a) eine Filzdichtung ist und die zweite Dichtung (35b) eine Quad-Ring-Elastomerdichtung ist.

8. Wechselbare anpassungsfähige Plattform zur generativen Fertigung (25) nach einem der vorhergehenden Ansprüche, wobei der zweite Sockel (41) einen Träger (41a) und eine wechselbare obere Fertigungsoberfläche (41b) beinhaltet.

9. Wechselbare anpassungsfähige Plattform zur generativen Fertigung (25) nach Anspruch 8, wobei die wechselbare obere Fertigungsoberfläche (41b) durch Verschrauben an dem Träger (41a) befestigt ist.

10. Wechselbare anpassungsfähige Plattform zur generativen Fertigung (25) nach einem der vorhergehenden Ansprüche, ferner beinhaltend wechselbare Transportmittel (65), die dazu konfiguriert sind, an der Trägertafel (27) befestigt zu werden, um die Handhabung der Plattform (25) während ihrer Einbringung oder ihrer Entfernung aus dem Produktionsgehäuse (100) zu erleichtern.

11. Wechselbare anpassungsfähige Plattform zur generativen Fertigung (25) nach einem der vorhergehenden Ansprüche, ferner beinhaltend:
- eine erste Trägerplatte (293), die mit der Trägertafel (27) starr verbunden ist, den Boden des zweiten Behälters (29) bildet und eine Entlüftungsöffnung (296) beinhaltet, wobei die erste Trägerplatte (293) eine mittige Öffnung beinhaltet, die den Durchgang einer ersten Stange (33) gestattet, welche den ersten Kolben (297) starr mit einer ersten Verbindungsplatte (31) verbindet, welche dazu konfiguriert ist, an der ersten Tafel (5) befestigt zu sein, und
- eine zweite Trägerplatte (45), die mit der Trägertafel (27) starr verbunden ist, an dem unteren Ende der Umfangswand (43) angeordnet ist und eine Entlüftungsöffnung (296) beinhaltet, wobei die zweite Trägerplatte (45) eine mittige Öffnung beinhaltet, die den Durchgang einer zweiten Stange (51) gestattet, welche einen Träger (41a) des zweiten Sockels (41) starr mit einer zweiten Verbindungsplatte (49) verbindet, welche dazu konfiguriert ist, an dem ersten Sockel (11) befestigt zu sein.

12. Wechselbare anpassungsfähige Plattform zur generativen Fertigung (25) nach einem der vorhergehenden Ansprüche, ferner beinhaltend ein Reduzierungsteilsystem (26), das ein erstes Distanzstück (260) und ein zweites Distanzstück (262) beinhaltet, die dazu bestimmt sind, jeweils in dem zweiten Behälter (29) bzw. innerhalb der Umfangswand (43) positioniert zu werden, um das Anpassen der Größe des Metallpulverbehälters und der Schmelzzone zu gestatten.

13. Wechselbare anpassungsfähige Plattform zur generativen Fertigung (25) nach den Ansprüchen 2 und 12, wobei das erste (260) und das zweite (262) Distanzstück rohrförmig sind und einen Innenzylinder definieren und wobei die Breite de Begrenzungsschienen (28') derart angepasst ist, dass der Abstand zwischen den Begrenzungsschienen dem Durchmesser des Innenzylinders des ersten (260) und des zweiten (262) Distanzstücks entspricht.

14. Verfahren zur generativen Metallfertigung durch Laserschmelzen in einem angepassten Apparat, der Folgendes beinhaltet:
- ein Produktionsgehäuse (100), das Folgendes beinhaltet:
- einen Trägerrahmen (17), der Folgendes begrenzt:
- eine erste sogenannte Zufuhrzone (Z1) für Metallpulver (9), die einen ersten Behälter (3) beinhaltet, dessen Boden durch eine erste vertikal verfahrbare Tafel (5) verwirklicht ist,
- eine zweite sogenannte Fertigungszone (Z2), die an die erste Zone (Z1) angrenzt und einen ersten vertikal verfahrbaren Sockel (11) beinhaltet,
- eine Laseremissionsvorrichtung (15), die dazu konfiguriert ist, Metallpulverpartikel (9), die in der zweiten Zone (Z2) angeordnet sind, zu schmelzen,
- einen horizontal verfahrbaren Arm (19), der dazu konfiguriert ist, ein Abstreifelement (21, 63) zwischen einer ersten Position und einer zweiten Position zu bewegen, wobei sich die erste (Z1) und die zweite (Z2) Zone zwischen der ersten und der zweiten Position befinden, um Metallpulverpartikel (9) in der zweiten Zone (Z2) zu verteilen,
wobei das Verfahren ferner die Verwendung einer wechselbaren anpassungsfähigen Plattform (25) beinhaltet, die Folgendes beinhaltet:
- eine Trägertafel (27), die dazu konfiguriert ist, auf dem Trägerrahmen (17) des Gehäuses (100), der sich um die erste (Z1) und die zweite (Z2) Zone erstreckt, zu liegen zu kommen und die erste (Z1) und die zweite (Z2) Zone mindestens teilweise zu bedecken, wobei die Trägertafel (27) Folgendes beinhaltet:
- einen ersten sogenannten Sektor (S1) mit reduzierter Zufuhr von Metallpulver (9), der einen zweiten Behälter (29) beinhaltet, dessen horizontaler Querschnitt kleiner als derjenige des ersten Behälters (3) ist und dessen Boden durch einen ersten Kolben (297) gebildet wird, der dazu konfiguriert ist, mit der ersten Tafel (5) über eine erste Verbindungsplatte (31) integral bewegbar zu sein, welche mit dem ersten Kolben (297) fest verbunden ist und dazu konfiguriert ist, durch eine magnetische Befestigung (34) an der ersten Tafel (5) befestigt zu sein,
- einen zweiten sogenannten Sektor (S2) mit reduzierter Fertigung, der an den ersten Sektor (S1) angrenzt und einen zweiten vertikal verfahrbaren Sockel (41) beinhaltet, dessen horizontaler Querschnitt kleiner als derjenige des ersten Sockels (11) ist, wobei der zweite Sockel (41) dazu konfiguriert ist, mit dem ersten Sockel (11) über eine zweite Verbindungsplatte (49) integral bewegbar zu sein, welche mit dem zweiten Sockel (41) fest verbunden ist und dazu konfiguriert ist, durch eine magnetische Befestigung (34) an dem ersten Sockel (11) befestigt zu sein,
- einen dritten sogenannten Auffangsektor (S3), der an den zweiten Sektor (S2) angrenzt,
- eine Vorrichtung zum Stoppen (37) des Abstreifelements (63), um einen Kontakt zwischen dem Abstreifelement (63) und dem ersten Kolben (297) zu verhindern, wenn der erste Kolben (297) das Niveau der Trägertafel (27) überschreiten sollte, wobei die Stoppvorrichtung Folgendes beinhaltet:
- einen ersten Teil (37a), der mit der Trägertafel (27) fest verbunden ist, beinhaltend:
- eine Basis (370),
- einen Schieber (372), der dazu konfiguriert ist, sich in der Basis (370) zwischen einer unteren Position, die sich unter der Trägertafel (27) befindet, und einer oberen Position, in der der Schieber (372) oberhalb der Trägertafel (27) vorsteht, axial zu bewegen,
- einen zweiten Teil (37b), der mit der ersten Verbindungsplatte (31) fest verbunden ist und dazu konfiguriert ist, gegen den Schieber (372) zu drücken, wenn sich die erste Verbindungsplatte (31) in einer hohen Position befindet,
wobei das Verfahren die folgenden Schritte beinhaltet:
- Platzieren der wechselbaren anpassungsfähigen Plattform (25) in dem Gehäuse (100), sodass der erste Sektor (S1) gegenüber einem Abschnitt der ersten Zone (Z1) zu liegen kommt, der zweite Sektor (S2) gegenüber einem Abschnitt der zweiten Zone (Z2) zu liegen kommt und der dritte Sektor (S3) gegenüber einem Abschnitt der zweiten Zone (Z2) zu liegen kommt,
- starres Verbinden des ersten Kolbens (297) mit der ersten Tafel (5) und des zweiten Sockels (41) mit dem ersten Sockel (11),
- Befüllen des zweiten Behälters (29) mit Metallpulver,
- iteratives Anwenden der folgenden Fertigungsschritte:
- Bewegen des ersten Kolbens (297) um eine vorbestimmte Höhe nach oben, um eine vorbestimmte Menge an Metallpulver (9) aus dem zweiten Behälter (29) herauszubefördern,
- Bewegen des verfahrbaren Arms (19) von einer ersten Position, die sich auf einer ersten Seite des ersten (S1) und des zweiten (S2) Sektors befindet, zu einer zweiten Position, die sich auf der zweiten Seite des ersten (S1) und des zweiten (S2) Sektors befindet, um die vorbestimmte Menge an Metallpulver (9) mittels des Abstreifelements (63) in dem zweiten Sektor (S2) zu verteilen,
- Übertragen eines Laserstrahls, der aus der Laseremissionsvorrichtung (15) stammt, zu vorbestimmten Stellen des zweiten Sektors (S2), die die zu schmelzenden Metallpulverpartikel (9) beinhalten,
- Bewegen des zweiten Sockels (41) um eine vorbestimmte Höhe so weit nach unten, wie es einer Schicht Metallpulverpartikeln (9) entspricht,
- Zurückbewegen des verfahrbaren Arms (19) in seine erste Position.

## Claims

1. Adaptive removable additive manufacturing platform (25) for an apparatus (1) for metal additive manufacturing by laser fusion, said apparatus (1) comprising:
- a production enclosure (100) comprising:
- a support frame (17) delimiting:
- a first zone (Z1), referred to as zone for the supply of metal powder (9), comprising a first reservoir (3) whose bottom is produced by a first panel (5) movable in vertical translation,
- a second zone (Z2), referred to as manufacturing zone, adjacent to the first zone (Z1) and comprising a first pedestal (11) movable in vertical translation,
- a laser emission device (15) configured to fuse particles of metal powder (9) disposed in the second zone (Z2),
- a movable arm (19) movable in horizontal translation and configured to move a scraper element (21, 63) between a first position and a second position, the first (Z1) and second (Z2) zones being situated between the first and the second position, in such a way as to distribute particles of metal powder (9) in the second zone (Z2),
said platform (25) comprising:
- a support panel (27) configured to be placed against the support frame (17) of the enclosure (100) extending around the first (Z1) and second (Z2) zones and to at least partially cover the first (Z1) and second (Z2) zones, the support panel (27) comprising:
- a first sector (S1), referred to as sector for the reduced supply of metal powder (9), configured to extend opposite a portion of the first zone (Z1) and comprising a second reservoir (29) whose horizontal section is smaller than that of the first reservoir (3) and whose movable bottom is formed by a first piston (297) configured to move as one with the first panel (5) via a first connecting plate (31) secured to the first piston (297) and configured to be fastened to the first panel (5) by a magnetic fastening (34),
- a second sector (S2), referred to as reduced manufacturing sector, adjacent to the first sector (S1) and configured to extend opposite a portion of the second zone (Z2) and comprising a second pedestal (41) movable in vertical translation inside a peripheral wall (43) and whose horizontal section is smaller than that of the first pedestal (11), the second pedestal (41) being configured to move as one with the first pedestal (11) via a second connecting plate (49) secured to the second pedestal (41) and configured to be fastened to the first pedestal (11) by a magnetic fastening (34),
- a third sector (S3), referred to as recovery sector, adjacent to the second sector (S2) and configured to extend opposite a portion of the second zone (Z2),
- a stopping device (37) for the scraper element (63) in order to avoid contact between the scraper element (63) and the first piston (297) if said first piston (297) were to go beyond the level of the support panel (27), the stopping device comprising:
- a first part (37a) secured to the support panel (27), comprising:
- a base (370),
- a slide (372) configured to move axially in the base (370) between a low position situated below the support panel (27) and a high position in which the slide (372) protrudes above the support panel (27),
- a second part (37b) secured to the first connecting plate (31) and configured to bear against the slide (372) when the first connecting plate (31) is in a high position.

2. Adaptive removable additive manufacturing platform (25) according to Claim 1, also comprising delimiting rails (28) disposed on either side of the support panel (27) and configured to transversely delimit a zone for the spreading of the metal powder (9) .

3. Adaptive removable additive manufacturing platform (25) according to Claim 1 or 2, wherein the third sector (S3) comprises a third reservoir (61) intended to receive at least part of the metal powder (9) scraped by the scraper element (63) into the third sector (S3).

4. Adaptive removable additive manufacturing platform (25) according to Claim 3, wherein the third reservoir (61) is a removable reservoir for emptying the recovered metal powder (9).

5. Adaptive removable additive manufacturing platform (25) according to one of the preceding claims, wherein the first reservoir (3) has a rectangular parallelepipedal form and the second reservoir (29) has a cylindrical form, the first pedestal (11) has a horizontal section of rectangular form and the second pedestal (41) has a horizontal section of circular form.

6. Adaptive removable additive manufacturing platform (25) according to one of the preceding claims, wherein the second reservoir (29) comprises at least one seal (35) disposed between the first piston (297) and a wall (291) of the second reservoir (29).

7. Adaptive removable additive manufacturing platform (25) according to Claim 6, wherein the second reservoir (29) comprises a first seal (35a) and a second seal (35b) disposed in peripheral groove is provided in the first piston (297), the first seal (35a) being a felt seal and the second seal (35b) being an X-ring made of elastomer.

8. Adaptive removable additive manufacturing platform (25) according to one of the preceding claims, wherein the second pedestal (41) comprises a support (41a) and a removable upper manufacturing surface (41b) .

9. Adaptive removable additive manufacturing platform (25) according to Claim 8, wherein the removable upper manufacturing surface (41b) is fastened to the support (41a) by screwing.

10. Adaptive removable additive manufacturing platform (25) according to one of the preceding claims, also comprising removable transport means (65) configured to be fastened to the support panel (27) in order to facilitate the manipulation of the platform (25) during its introduction into or its removal from the production enclosure (100).

11. Adaptive removable additive manufacturing platform (25) according to one of the preceding claims, also comprising:
- a first support plate (293) rigidly connected to the support panel (27), forming the bottom of the second reservoir (29) and comprising a vent (296), the first support plate (293) comprising a central opening allowing the passage of a first rod (33) rigidly connecting the first piston (297) to a first connecting plate (31) configured to be fastened to the first panel (5), and
- a second support plate (45) rigidly connected to the support panel (27), disposed against the lower end of the peripheral wall (43) and comprising a vent (296), the second support plate (45) comprising a central opening allowing the passage of a second rod (51) rigidly connecting a support (41a) of the second pedestal (41) to a second connecting plate (49) configured to be fastened to the first pedestal (11) .

12. Adaptive removable additive manufacturing platform (25) according to one of the preceding claims, also comprising a reduction subsystem (26) comprising a first spacer (260) and a second spacer (262) which are intended to be positioned respectively in the second reservoir (29) and inside the peripheral wall (43) so as to make it possible to adapt the size of the metal powder reservoir and the fusion zone.

13. Adaptive removable additive manufacturing platform (25) according to Claims 2 and 12, wherein the first (260) and second (262) spacers are of tubular form defining an inner cylinder, and wherein the width of the delimiting rails (28') is adapted such that the spacing between said delimiting rails corresponds to the diameter of the inner cylinder of the first (260) and second (262) spacers.

14. Method for metal additive manufacturing by laser fusion in an adapted apparatus comprising:
- a production enclosure (100) comprising:
- a support frame (17) delimiting:
- a first zone (Z1), referred to as zone for the supply of metal powder (9), comprising a first reservoir (3) whose bottom is produced by a first panel (5) movable in vertical translation,
- a second zone (Z2), referred to as manufacturing zone, adjacent to the first zone (Z1) and comprising a first pedestal (11) movable in vertical translation,
- a laser emission device (15) configured to fuse particles of metal powder (9) disposed in the second zone (Z2),
- a movable arm (19) movable in horizontal translation and configured to move a scraper element (21, 63) between a first position and a second position, the first (Z1) and second (Z2) zones being situated between the first and the second position, in such a way as to distribute particles of metal powder (9) in the second zone (Z2),
said method also comprising the use of an adaptive removable platform (25) comprising:
- a support panel (27) configured to be placed against the support frame (17) of the enclosure (100) extending around the first (Z1) and second (Z2) zones and to at least partially cover the first (Z1) and second (Z2) zones, the support panel (27) comprising:
- a first sector (S1), referred to as sector for the reduced supply of metal powder (9), comprising a second reservoir (29) whose horizontal section is smaller than that of the first reservoir (3) and whose bottom is formed by a first piston (297) configured to move as one with the first panel (5) via a first connecting plate (31) secured to the first piston (297) and configured to be fastened to the first panel (5) by a magnetic fastening (34),
- a second sector (S2), referred to as reduced manufacturing sector, adjacent to the first sector (S1) and comprising a second pedestal (41) movable in vertical translation whose horizontal section is smaller than that of the first pedestal (11), the second pedestal (41) being configured to move as one with the first pedestal (11) via a second connecting plate (49) secured to the second pedestal (41) and configured to be fastened to the first pedestal (11) by a magnetic fastening (34),
- a third sector (S3), referred to as recovery sector, adjacent to the second sector (S2),
- a stopping device (37) for the scraper element (63) in order to avoid contact between the scraper element (63) and the first piston (297) if said first piston (297) were to go beyond the level of the support panel (27), the stopping device comprising:
- a first part (37a) secured to the support panel (27), comprising:
- a base (370),
- a slide (372) configured to move axially in the base (370) between a low position situated below the support panel (27) and a high position in which the slide (372) protrudes above the support panel (27),
- a second part (37b) secured to the first connecting plate (31) and configured to bear against the slide (372) when the first connecting plate (31) is in a high position,
said method comprising the following steps:
- placing the adaptive removable platform (25) in the enclosure (100) such that the first sector (S1) comes to be opposite a portion of the first zone (Z1), the second sector (S2) comes to be opposite a portion of the second zone (Z2) and the third sector (S3) comes to be opposite a portion of the second zone (Z2),
- rigidly connecting the first piston (297) to the first panel (5) and the second pedestal (41) to the first pedestal (11),
- filling the second reservoir (29) with metal powder,
- iteratively applying the following manufacturing steps:
- moving the first piston (297) by a predetermined height upwards so as to bring a predetermined quantity of metal powder (9) out of the second reservoir (29),
- moving the movable arm (19) from a first position situated on a first side of the first (S1) and second (S2) sectors to a second position situated on the second side of the first (S1) and second (S2) sectors so as to distribute the predetermined quantity of metal powder (9) in the second sector (S2) via the scraper element (63),
- transmitting a laser beam originating from the laser emission device (15) to predetermined locations of the second sector (S2) comprising the particles of metal powder (9) to be fused,
- moving the second pedestal (41) by a predetermined height downwards corresponding to a layer of particles of metal powder (9),
- putting the movable arm (19) back in its first position.
